# EUROPEAN PATENT APPLICATION

(11) **EP 2 735 536 A1**
(43) Date of publication of application: **28.05.2014**
(21) Application number: 12814374.0
(22) Date of filing: 23.03.2012
(51) Int. Cl.: B65H 75/38

(54) **CORD HOUSING DEVICE**

(30) Priority: 20.07.2011 JP 2011158652
(71) Applicant: Chuo Hatsujo Kabushiki Kaisha, Nagoya-shi, Aichi 458-8505 (JP)
(72) Inventor: MIZUNO Eiji, Nagoya-shi Aichi 458-8505 (JP); KINOMURA Shigeki, Toyota-shi Aichi 471-8571 (JP); ONO Tomoya, Toyota-shi Aichi 471-8571 (JP)
(74) Representative: Kramer - Barske - Schmidtchen
(86) International application number: PCT/JP2012/057494
(87) International publication number: WO 2013/011717

(57) **Abstract**

A cord housing apparatus disclosed in the present description has a cord, a drum on which the cord is wound, a biasing member for biasing the drum in a cord reel-in direction, a cord delivery device arranged on a side where the cord is reeled out from the drum, a switch for turning the cord delivery device on and off, and a selection switch for selecting a cord feeding direction of the cord delivery device. The cord delivery device is capable of delivering the cord both in a cord reel-out direction and in the cord reel-in direction.

## Description

### TECHNICAL FIELD

The technique disclosed in the present description relates to a cord housing apparatus for housing a cord (such as an electric cord).

### BACKGROUND ART

There is a known cord housing apparatus in which a cord is reeled up on a drum when the cord is unused and the cord can be reeled out from the drum at the time of use. For example, Japanese Patent Application Publication No. 2010-52861 discloses a cord housing apparatus for housing a charging electric cord connecting an electric vehicle and a power source. This cord housing apparatus has a drum rotatably attached to a casing, and an electric cord is wound on an outer peripheral surface of the drum. The electric cord is reeled out from the drum by a length required at the time of use, and reeled up on the drum after use. It should be noted that the cord housing apparatus according to one example of Japanese Patent Application Publication No. 2010-52861 is equipped with a drive device for rotating the drum in the direction in which the electric cord is reeled up, so that the electric cord is automatically reeled up on the drum.

### SUMMARY OF INVENTION

### Technical Problem

In the technique of Japanese Patent Application Publication No. 2010-52861, the drum is driven and rotated by the drive device only when the electric cord is reeled up on the drum. Therefore, at the time of reeling out the electric cord from the drum, an operator has to manually rotate the drum and reel out the electric cord. When the electric cord is long or the electric cord itself is heavy, the operator is required to have a large operation force for reeling out the electric cord from the drum. The present description discloses a cord housing apparatus capable of automatically reeling out a cord.

### Solution to Problem

A cord housing apparatus disclosed in the present description has a cord, a drum on which the cord is wound, a biasing member for biasing the drum in a cord reel-in direction, a cord delivery device arranged on a side where the cord is reeled out from the drum, an input device for turning the cord delivery device on and off, and selecting a cord feeding direction of the cord delivery device. The cord delivery device is capable of delivering the cord both in a cord reel-out direction and in the cord reel-in direction.

In this cord housing apparatus, the biasing member for biasing the drum in the cord reel-in direction is provided, and the cord delivery device is arranged on the side where the cord is reeled out from the drum. Thereby, while giving a tensile force to the cord, the cord can be delivered both in the cord reel-out direction and in the cord reel-in direction. At the time of delivering the cord, by the input device, the cord delivery device is turned on and the cord reel-out direction is selected as the cord feeding direction. Thereby, the cord is automatically reeled out from the drum. At the time of reeling up the cord, by the input device, the cord delivery device is turned on and the cord reel-in direction is selected as the cord feeding direction. Thereby, the cord is automatically reeled up on the drum. In this cord housing apparatus, the cord can automatically be reeled out from the drum and the cord can automatically be reeled up on the drum.

### BRIEF DESCRIPTION OF DRAWINGS

Fig. 1 is a schematic configuration diagram of a cord housing apparatus of the present example.
Fig. 2 is an enlarged view showing a configuration of a cord delivery device.
Fig. 3 is a view showing a configuration of a control system of the cord housing apparatus of the present example.

### DESCRIPTION OF EMBODIMENTS

In a cord housing apparatus disclosed in the present description, an input device may have an ON/OFF switch configured to turn a cord delivery device on and off, and a selection switch configured to select a cord feeding direction of the cord delivery device. A plug may be provided in a leading end of a cord, and the ON/OFF switch and the selection switch may be provided in the plug. With such a configuration, since the ON/OFF switch and the selection switch are provided in the plug, an operator can operate the cord delivery device at a position of the plug.

The cord housing apparatus disclosed in the present description may further have a control device configured to control a cord delivery speed of the cord delivery device. In this case, the control device may (1) measure a delivery amount of the cord when the cord is delivered in a cord reel-out direction, and (2) control the cord delivery speed when the cord is delivered in a cord reel-in direction, based on the cord delivery amount measured when the cord was delivered in the cord reel-out direction and a cord delivery amount to be measured when the cord is delivered in the cord reel-in direction. With such a configuration, the cord reel-out amount is measured when the cord is reeled out, and the cord is reeled up based on the measured cord reel-out amount and the cord reel-in amount to be measured at the time of reeling up the cord. Therefore, completion of the cord reel-in can be determined, so that the cord reel-in can be properly performed.

### Examples

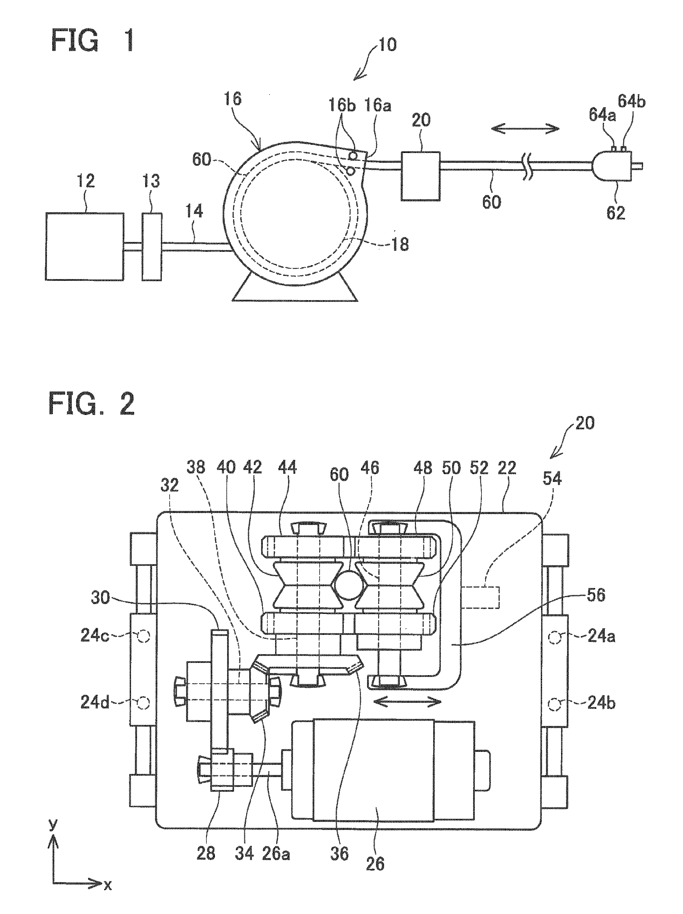

A cord housing apparatus 10 of the present example is mounted on an electric vehicle (EV) or a plug-in hybrid electric vehicle (PHEV). The cord housing apparatus 10 houses an electric cord 60 for charging a battery 12 mounted on the electric vehicle or the like. As shown in Fig. 1, the cord housing apparatus 10 has a housing 16, a drum 18 rotatably attached to the housing 16, the electric cord 60 to be wound on the drum 18, and a cord delivery device 20 for delivering the electric cord 60.

The housing 16 is attached to an installment part (such as a trunk room or an engine room) provided in a vehicle body. The housing 16 houses the drum 18. A cord reel-out part 16a for reeling out the electric cord 60 wound on the drum 18 to an outer side of the housing 16 is provided in the housing 16. A pair of guide rollers 16b, 16b is installed in the cord reel-out part 16a. The guide rollers 16b, 16b guide the electric cord 60 reeled out from the cord reel-out part 16a. Since the electric cord 60 is wound on the drum 18, a winding curl is caused thereon. By providing the guide rollers 16b, 16b in the cord reel-out part 16a, the electric cord 60 is reeled out from the cord reel-out part 16a in a direction in which the winding curl is solved (specifically, obliquely downward as shown in Fig. 1). One end of a power supply cord 14 passes through the housing 16, and is connected to the electric cord 60. The other end of the power supply cord 14 is connected to the battery 12 via a vehicle side charging device 13.

The drum 18 is rotatably supported on the housing 16. The drum 18 is biased in a cord reel-in direction by a mainspring (not shown) (corresponding to one example of a biasing member in the claims). A base end of the electric cord 60 is attached to the drum 18, and the electric cord 60 is wound on an outer peripheral surface of the drum 18.

The base end of the electric cord 60 is connected to one end of the power supply cord 14 via a slip ring (not shown). Thereby, the electric cord 60 and the battery 12 are electrically connected. A plug 62 is provided in a leading end of the electric cord 60. A reel-out switch 64a and a reel-in switch 64b are provided in the plug 62. When the reel-out switch 64a is turned on, the cord delivery device 20 delivers the electric cord 60 in a cord reel-out direction. When the reel-in switch 64b is turned on, the cord delivery device 20 delivers the electric cord 60 in the cord reel-in direction. When the reel-out switch 64a and the reel-in switch 64b are both turned off, an operation of delivering the electric cord 60 by the cord delivery device 20 is stopped. Therefore, the reel-out switch 64a and the reel-in switch 64b correspond to one example of an "ON/OFF switch" and a "selection switch" in the claims.

The cord delivery device 20 is arranged on a side where the electric cord 60 is reeled out from the drum 18. The cord delivery device 20 can deliver the electric cord 60 both in the cord reel-out direction and the cord reel-in direction. As shown in Fig. 2, the cord delivery device 20 is formed by a base 22, a motor 26 attached to the base 22, a pair of rollers 42, 50 to be driven by the motor 26, and gear transmission mechanisms (28, 30, 34, 36, 40, 44, 48, 52) for transmitting rotation of the motor 26 to the pair of rollers 42, 50.

The base 22 is arranged to face the cord reel-out part 16a of the housing 16. The base 22 is attached to the housing 16 by coupling rods 24a to 24d. The base 22 is capable of sliding with respect to the coupling rods 24a to 24d, so that a distance between the housing 16 and the base 22 can be adjusted. A through hole (not shown) is formed in the base 22, and the electric cord 60 is inserted into the through hole.

The motor 26 is attached to the base 22. The power is supplied to the motor 26 from the battery 12 via the power supply cord 14. It should be noted that the power can be supplied to the motor 26 not only by the battery 12 but also by another battery (not shown) mounted on the vehicle. The gear 28 is attached to an output shaft 26a of the motor 26. The gear 28 is meshed with the gear 30. The gear 30 is attached to a rotation shaft 32, and the rotation shaft 32 is rotatably attached to the base 22. The bevel gear 34 is attached to one end of the rotation shaft 32. The bevel gear 34 is meshed with the bevel gear 36. The bevel gear 36 is fixed to one end of a rotation shaft 38.

The rotation shaft 38 is rotatably attached to the base 22. The roller 42, and the pair of gears 40, 44 arranged so as to sandwich the roller 42 are attached to the rotation shaft 38. The gears 52, 48 are respectively meshed with the gears 40, 44. The gears 52, 48 are attached to a rotation shaft 46. The roller 50 is attached to the rotation shaft 46 so as to be sandwiched between the gears 52, 48. Therefore, the roller 50 is arranged at a position facing the roller 42. The rollers 42, 50 are formed in an hourglass shape, and the electric cord 60 inserted into the through hole of the base 22 is guided between both the rollers.

The rotation shaft 46 is rotatably supported by an arm 56. The arm 56 is attached slidably in an x direction with respect to the base 22. By letting the arm 56 slide in the x direction, a distance between the roller 42 and the roller 50 can be adjusted. The arm 56 is biased toward the side of the rotation shaft 38 by a spring 54 (such as a coil spring, a disc spring, and a plate spring). A backlash of the gear 40 and the gear 52 and a backlash of the gear 44 and the gear 48 are similarly adjusted, and these backlashes are set to be relatively large. Therefore, even when the distance between the roller 42 and the roller 50 is changed within a predetermined range, meshing between the gear 40 and the gear 52 and meshing between the gear 44 and the gear 48 are maintained. Thereby, even when a diameter of the electric cord 60 is slightly changed, the arm 56 slides in accordance with the change, the electric cord 60 is favorably nipped by the pair of rollers 42, 50, and the meshing between the gears 40, 44 and the gears 52, 48 is also maintained. It should be noted that the rollers 42, 50 can be formed of a resin material such as POM, an elastomer material such as urethane, or a rubber material such as EPDM. A shape of the rollers 42, 50 is not limited to an hourglass shape but can be formed in a various shapes.

In the above cord delivery device 20, when the motor 26 is rotated, the rotation is transmitted to the gear 30 via the gear 28. Thereby, the gear 30 is rotated, and the rotation shaft 32 and the bevel gear 34 are also rotated. Since the bevel gear 34 is rotated, the bevel gear 36 and the rotation shaft 38 are also rotated. Since the rotation shaft 38 is rotated, the roller 42 and the gears 40, 44 are also rotated. As a result, the gears 52, 48 meshed with the gears 40, 44 are rotated, and thereby, the rotation shaft 46 and the roller 50 are also rotated. Since the pair of rollers 42, 50 is rotated, the electric cord 60 nipped by these rollers 42, 50 is delivered. It should be noted that as clear from the above description, when a rotation direction of the motor 26 is changed, a rotation direction of the rollers 42, 50 is also changed, and a direction in which the electric cord 60 is delivered is also changed (that is, changed into the cord reel-out direction or the cord reel-in direction).

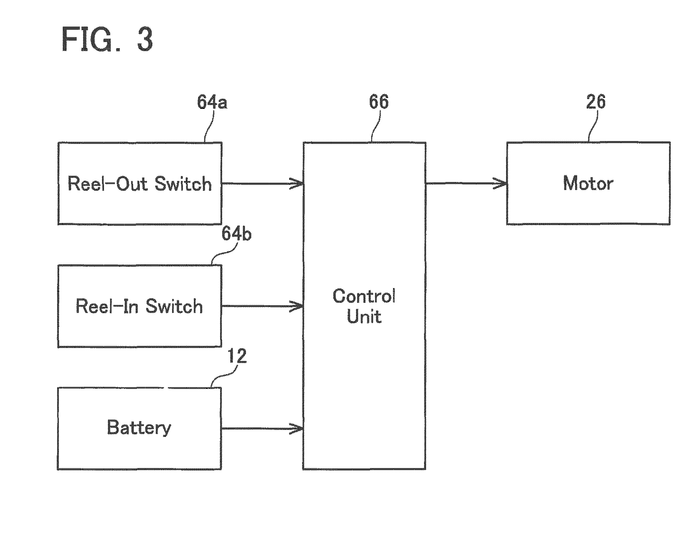

A configuration of a control system of the above cord housing apparatus 10 will be simply described. As shown in Fig. 3, the cord housing apparatus 10 includes a control unit 66, and is controlled by the control unit 66. The control unit 66 can be formed by a microcomputer including a CPU, a ROM, and a RAM. The control unit 66 is connected to the motor 26 to control and drive the motor 26. The control unit 66 is connected to the reel-out switch 64a, the reel-in switch 64b, and the battery 12. Signals from the reel-out switch 64a and the reel-in switch 64b are inputted to the control unit 66. The power from the battery 12 is inputted to the control unit 66. The power inputted from the battery 12 is supplied to the motor 26 via the control unit 66.

Next, operations of the above cord housing apparatus 10 will be described. In order to charge the battery 12, firstly, the operator (such as a driver) turns on the reel-out switch 64a provided in the plug 62 of the electric cord 60. When the reel-out switch 64a is turned on, the control unit 66 drives and rotates the motor 26 in the cord reel-out direction. Thereby, the electric cord 60 is reeled out from the drum 18. Since the drum 18 is biased in the cord reel-in direction by the mainspring as described above, a tensile force (pulling force) is applied to the electric cord 60. Therefore, by the cord delivery device 20, the electric cord 60 is smoothly delivered in the cord reel-out direction without loosening. It should be noted that since the drum 18 is biased by the mainspring, a force of biasing the drum 18 in the cord reel-in direction is increased in accordance with an increase in a reel-out amount of the electric cord 60. Therefore, the control unit 66 increases a voltage to be applied to the motor 26 in accordance with the reel-out amount of the electric cord 60, and controls to fix the speed of reeling out the electric cord 60.

When the electric cord 60 is reeled out by a required length, the operator turns off the reel-out switch 64a of the plug 62. Thereby, the control unit 66 stops the drive of the motor 26. Next, the operator connects the plug 62 of the electric cord 60 to an external power source, to electrically connect the external power source and the battery 12. Thereby, the battery 12 is charged from the external power source. When the charging of the battery 12 is finished, the operator cancels the connection between the electric cord 60 and the external power source.

Next, the operator turns on the reel-in switch 64b provided in the plug 62 of the electric cord 60. When the reel-in switch 64b is turned on, the control unit 66 drives and rotates the motor 26 in the cord reel-in direction, and the electric cord 60 is reeled up on the drum 18. Since the drum 18 is biased in the cord reel-in direction by the mainspring as described above, the tensile force (pulling force) is applied to the electric cord 60. Therefore, the electric cord 60 is smoothly reeled up on the drum 18 without loosening. Since the drum 18 is biased by the mainspring, the force of biasing the drum 18 in the cord reel-in direction is decreased in accordance with the reel-in of the electric cord 60 on the drum 18. Therefore, the control unit 66 controls the voltage to be applied to the motor 26 in accordance with a reel-in amount of the electric cord 60 on the drum 18, and controls to fix the speed of reeling up the electric cord 60 on the drum 18. When the electric cord 60 is reeled up on the drum 18, the operator turns off the reel-in switch 64b of the plug 62. Thereby, the reel-in of the electric cord 60 on the drum 18 is finished.

As clear from the above description, in the cord housing apparatus 10 of the present example, the electric cord 60 is delivered both in the cord reel-out direction and the cord reel-in direction by the cord delivery device 20. Therefore, the electric cord 60 can automatically be reeled out from the drum 18, and can automatically be reeled up on the drum 18. At this time, since the drum 18 is biased in the cord reel-in direction by the mainspring, the electric cord 60 can be smoothly reeled out and reeled up without loosening and slackening.

The specific examples of the present invention are described above in detail. However, these are only examples and do not limit the claims. The technique described in the claims includes various deformations and modifications of the specific examples shown in the above description.

For example, control of the delivery device 20 by the control unit 66 (that is, control of the cord reel-out speed and control of the cord reel-in speed) can be implemented in various modes. For example, when the electric cord 60 is reeled out from the drum 18, the control unit 66 measures a rotation amount of the drum 18. That is, the rotation amount of the drum 18 from when the reel-out switch 64a is turned on until when the switch is turned off (that is, a total delivery amount of the electric cord 60) is measured. When the electric cord 60 is reeled up on the drum 18, the control unit 66 measures a rotation amount of the drum 18 (that is, the reel-in amount of the electric cord 60), and determines whether the reel-in of the electric cord 60 is completed or about to be completed from a difference between the measured rotation amount and the total rotation amount measured at the time of reeling out the cord. When it is determined that the reel-in of the electric cord 60 is completed or about to be completed, the drive of the motor 26 is stopped or a drive force thereof is reduced. With such a mode, a situation that the motor 26 is continuously driven with a large drive force even after the reel-in of the electric cord 60 is completed can be prevented. It should be noted that a sensor such as an encoder can be used for measuring the rotation amount of the drum 18.

In the above example, by measuring the rotation amount of the drum 18, the cord reel-out amount and the cord reel-in amount are measured. However, more simply, determination may be done by a motor driving time. That is, the control unit 66 measures a time from when the reel-out switch 64a is turned on until when the switch is turned off. A cord reel-in time is estimated from the measured time, and it is determined whether the cord reel-in is completed or about to be completed from the estimated cord reel-in time. When it is determined that the cord reel-in is completed or about to be completed, the drive of the motor 26 is automatically stopped or the drive force is reduced. Even with such a mode, the same effects as the above description can be obtained. Further, by using a servomotor as the motor 26, control of a position and the speed of the motor 26 (control of the cord reel-out speed or the cord reel-in speed) may be performed.

In the above example, by measuring the cord reel-out amount and the cord reel-in amount, it is determined that the cord reel-in is completed or about to be completed. However, the present invention is not limited to such a mode. For example, when the reel-out or the reel-in of the cord is completed in a state that the power is supplied to the motor, an overcurrent flows through the motor. Therefore, by detecting the overcurrent flowing through the motor, the power supply to the motor may be stopped.

Further, in the above example, the cord delivery device 20 is provided as a separate body from the housing 16. However, the cord delivery device 20 may be integrated with the housing 16.

The cord housing apparatus 10 in the above example is an example to be mounted on a vehicle to house the electric cord for charging the battery mounted on the vehicle. However, the present invention can also be used for other uses. For example, when the plug in the leading end of the electric cord serves as a charging gun, the present invention can also be used for uses of a charging stand or a suspending type charging reel, a carrying type charging reel, or the like. The present invention can also be applied to an apparatus for reeling up and housing a cord (such as a hose through which a fluid (e.g. gas, water, and the air) flows) other than the electric cord.

The technical elements described in the present description or the drawings are not limited to the combination described in the claims at the time of application but exert technological usability solely or by various combinations. The technique exemplified in the present description or the drawings achieves plural objects at the same time, and has technological usability by achieving one of the objects.

## Claims

1. A cord housing apparatus comprising:
a cord;
a drum on which the cord is wound;
a biasing member configured to bias the drum in a cord reel-in direction;
a cord delivery device arranged on a side where the cord is reeled out from the drum, the cord delivery device being capable of delivering the cord both in a cord reel-out direction and in the cord reel-in direction; and
an input device for turning on/off the cord delivery device and selecting a cord feeding direction of the cord delivery device.

2. The cord housing apparatus according to claim 1, wherein
the input device comprises an ON/OFF switch configured to turn the cord delivery device on and off, and a selection switch configured to select the cord feeding direction of the cord delivery device,
a plug is provided in a leading end of the cord, and
the ON/OFF switch and the selection switch are provided in the plug.

3. The cord housing apparatus according to claim 1 or 2, further comprising:
a control device configured to control a cord delivery speed of the cord delivery device, wherein
the control device is configured to:
(1) measure a delivery amount of the cord when the cord is delivered in the cord reel-out direction; and
(2) control the cord delivery speed when the cord is delivered in the cord reel-in direction, based on the cord delivery amount measured when the cord was delivered in the cord reel-out direction and a cord delivery amount to be measured when the cord is delivered in the cord reel-in direction.
